# EUROPÄISCHE PATENTANMELDUNG

(11) **EP 2 123 170 A1**
(43) Veröffentlichungstag der Anmeldung: **25.11.2009**
(21) Anmeldenummer: 09006529.3
(22) Anmeldetag: 14.05.2009
(51) Int. Cl.: A23K 1/00, A23K 1/14

(54) **Futtermaiskolben mit Überzug und Verfahren zu seiner Herstellung**

(30) Priorität: 20.05.2008 DE 102008028364
(71) Anmelder: Vitakraft Werke Wührmann & Sohn GmbH & Co. KG, 28307 Bremen (DE)
(72) Erfinder: Wührmann, Heiko, 28832 Achim (DE)
(74) Vertreter: Lins, Martina

(57) **Zusammenfassung**

Die Erfindung bezieht sich auf Maiskolben für die Fütterung von kleinen Säugern und Papageienvogelarten. Das neue Futtermittel besteht aus einem Maiskolben, der mit einem auf dem Maiskolben haftenden, den Maiskolben ganz oder teilweise bedeckenden Überzug versehen ist, der wenigstens einen ausgewählten Nährstoff und/oder wenigstens einen Ballaststoff enthält. Der Maiskolben wird dadurch mit weiteren, für die Tiergesundheit wichtigen Stoffen aufgewertet.

## Beschreibung

Die Erfindung betrifft ein Futtermittel aus einem Maiskolben mit einem auf dem Maiskolben aufgetragenen und haftenden Überzug und ein Verfahren zu dessen Herstellung.

Allgemein werden Maiskolben besonders gern für die Fütterung von kleinen Säugern und Papageienvogelarten eingesetzt, da der Mais in seiner natürlichen Wuchsform von diesen Tieren sehr gerne angenommen wird und ihrem natürlichen Futteraufnahmeverhalten entgegenkommt.

Ernährungsphysiologisch ist Mais bzw sind die Maiskörner als stärkereich und rohfaserarm zu charakterisieren. Bei einem mittleren Eiweißgehalt fällt ein geringer Gehalt einzelner essentieller Aminosäuren wie Lysin, Methionin, Threonin und Tryptophan auf. Ebenso sind die Konzentrationen an Calcium, Natrium und Zink sowie an fett- als auch an wasserlöslichen Vitaminen als gering anzusehen.

Aufgrund dieses Nährstoffprofils würde eine einseitige Verwendung von Mais in der Fütterung von kleinen Säugern in der Heimtierhaltung zu einer Mangelernährung führen. Daher ist es ernährungsphysiologisch sinnvoll, den Mais tierartspezifisch mit den im Naturprodukt fehlenden Nährstoffen einschließlich der Mikronährstoffe (z. B. Mineralstoffe, Aminosäuren, Vitamine) und mit Ballaststoffen (Strukturstoffen, Rohfaser) zu ergänzen. Dies geschieht traditionell, indem neben Maiskolben anderes Futter als Streufutter gegeben wird, oder indem Nahrungsergänzungsmittei und andere Futterarten in Form von Futterkeksen, Knabbersticks usw. zugeführt werden,

Der Erfindung liegt die Aufgabe zugrunde, eine ernährungsphysiologisch günstigere und von den Tieren gern angenommene Form der Maisfütterung zu finden,

Diese Aufgabe wird mit Hilfe eines Futtermittels aus einem Maiskolben gelöst, bei welchem der Maiskolben mit einem auf dem Maiskolben haftenden, den Maiskolben ganz oder teilweise bedeckenden Überzug versehen ist, der wenigstens einen ausgewählten Nährstoff und/oder wenigstens einen Ballaststoff enthält.

Nach D. Blocher et al, "Nahrungsmittel", Verlag Gehlen, 3, Aufl. 2001, Seite 64, enthalten alle Nahrungsmittel und Futtermittel, für die sinngemäß das gleiche gilt, neben Begleitstoffen, wie Farb-, Duft- und Geschmacksstoffen in erster Linie Nährstoffe und Ballaststoffe. Die Nährstoffe können dabei nochmals in "Baustoffe" (in erster Linie Eiweiße), "Brehnstoffe" (Fett und Kohlehydrate) und Wirkstoffe unterschieden werden, Die Wirkstoffe werden im Folgenden auch Mikronährstoffe genannt.

Der Begriff "Nährstoff", wie er hier gebraucht wird, umfasst einerseits die Grundnährstoffe Kohlenhydrate, Fette und Proteine, aber gleichzeitig auch die Mikronährstoffe, die auch als Vitalstoffe bezeichnet werden. In Bezug auf die ernährungsphysiologische Aufwertung des Maiskolbens ist der Begriff Nährstoff auch tierartspezifisch zu sehen, Da Maiskolben kohlehydratreich sind, werden Nährstoffe aus dem Kohlenhydratsektor im Allgemeinen nicht mehr ergänzt werden müssen, es sei denn, die Gabe ganz bestimmter Kohlenhydrate oder kohlenhydrathaltiger Futterstoffe sei für eine bestimmte Tierart besonders gewünscht. Zu den Nährstoffen, die sinnvoller Weise mit Hilfe des erfindungsgemäßen Überzugs hinzugefügt werden sollten, gehören in erster Linie die Mikronährstoffe, Fette und Proteine, bei letzteren insbesondere solche, die Aminosäuren liefern, an denen Maiskolben arm sind, oder die essentiellen Aminosäuren selbst.

Zu den Mikronährstoffen oder Vitalstoffen zählen wir hier insbesondere: Vitamine, Mineralstoffe, Spurenelemente, sekundäre Pflanzenstoffe, Aminosäuren, insbesondere essentielle Aminosäuren, Fettsäuren, insbesondere essentielle Fettsäuren, Enzyme, Coenzyme.

Bei den Aminosäuren sind für die erfindungsgemäße Nahrungsergänzung auf Maiskolben folgende als bevorzugt anzusehen: Lysin, Methionin, Cystin, Arginin, Threonin, Tryptophan, und hierunter besonders Lysin, Methionin, Threonin und Tryptophan, die jeweils einzeln, gemeinsam oder in ausgewählter Zusammenstellung in dem Überzug vorhanden sein können.

Bei den Mineralstoffen sind für die erfindungsgemäße Nahrungsergänzung auf Maiskolben folgende als bevorzugt anzusehen: Calcium, Zink, Kupfer, Selen, Jod, Natrium, Magnesium, Eisen und Mangan, und hierunter besonders Calcium und Zink.

In einer bevorzugten Ausführungsform der Erfindung enthält der Überzug wenigstens einen Mikronährstoff, insbesondere wenigstens ein Vitamin, wenigstens einen Mineralstoff, wenigstens ein Spurenelement und/oder wenigstens eine (essentielle) Aminosäure.

Unter "Ballaststoffen" versteht man definitionsgemäß für den Körper weitgehend unverdauliche, d.h. unverwertbare organische Bestandteile. Hierbei ist zu berücksichtigen, dass die Verwertbarkeit tierartspezifisch ist. "Ballaststoffe" können vor allem in Magen und Dünndarm nicht verarbeitet und verstoffwechselt werden und sind für die Darmtätigkeit und die Verdauung von unerlässlicher Bedeutung. Zu den unlöslichen Ballaststoffen zählen vor allem die Rohfasern, Man spricht auch von Strukturstoffen, Die unlöslichen Ballaststoffe enthalten vor allem Cellulose, Hemizellulose und Lignin. Zu den löslichen Ballaststoffen zählen viele Kohlehydrate und vor allem Dextrine und Polysaccharide, wie unter anderem Pektin, Guarkernmehl (E412), Carubin (Johannisbrotkernmehl E 410), Gummi arabicum, Algen und Algenbestandteile, insbesondere Alginate wie Agar-Agar und Carrageen.

Die Ballaststoffe werden vorzugsweise bereitgestellt durch Rohfasern, z. B. von Leguminosen (Hülsenfrüchte und kleeartige Futterpflanzen wie Luzerne, Rotklee, Esparsette u.a.), Schalen, Spelzen, Kleie, Stengel, Getreide, vorzugsweise in Form von Vollkorn, Saaten, vorzugsweise ungeschält, Nüsse, Früchte, Gräser, Kräuter, Gemüse und Knollen, alle jeweils in ursprünglicher oder bearbeiteter Form, wie insbesondere gehackt, geschrotet, grobvermahlen, chemisch aufgeschlossen, in Extrudaten und Pellets.

Die erfinderische Idee besteht im Wesentlichen darin, natürliche Maiskolben durch einen darauf haftenden Überzug -der ein Teilüberzug sein kann - nahrungsphysiologisch aufzuwerten.

Die Erfindung bringt verschiedene Vorteile mit sich. Der Maiskolben bleibt für das Tier erkennbar und wird weiterhin als Futterquelle gut angenommen. Alle Vorteile des Naturfutters Maiskolben" bleiben erhalten. Gleichzeitig vereinfacht sich für den Tierhalter die Futtergabe erheblich, da mit dem Mais ergänzende Futterstoffe in automatisch vorgegebener Menge gegeben werden. Gerade bei der Hobby-Tierhaltung erspart dies dem Tierhalter, sich eingehender über die Nahrungsbedorfnisse seines Tieres zu informieren. Mangelerkrankungen werden vermieden. Der Maiskolben wird als Futtermittel mit weiteren für die Tiergesundheit wichtigen Stoffen aufgewertet.

Für die Aufwertung des Maiskolbens ist erfindungsgemäß wenigstens ein Nährstoff (einschließlich der Mikronährstoffe) und/oder wenigstens ein Ballaststoff in den Überzug einzubringen, den oder die der Fachmann - auch je nach der zu fütternden Tierart -auf Grundlage seines Fachwissens auswählt.

Um die Haftung innerhalb des Überzugs und auf dem Maiskolben zu bewirken, enthält der Überzug vorzugsweise wenigstens ein Bindemittel. Die Zugabe eines gesonderten Bindemittels erübrigt sich, wenn ein ausgewählter Nährstoff oder Ballaststoff Bindemitteleigenschaften mitbringt, so dass der Überzug in sich selbst zusammenhält und an der Maiskolbenoberfläche hinlänglich haftet. Als Bindemittel direkt geeignet sind die oben angegebenen wasserlöslichen Ballaststoffe und unter den Nährstoffen die meisten Fette, aber auch Proteine, z.B. Hühnereiweiß.

In besonders bevorzugter Ausführungsform enthält der Überzug ein Bindemittel, welches mit Wasser zur Quellung und/oder Verkleisterung und/oder Gelbildung befähigt ist, vorzugsweise ein Kohlehydrat oder kohlehydrathaltiges Bindemittel. Besonders bevorzugt ist Stärke oder ein stärkehaltiges Bindemittel. Da Maiskolben selbst stark stärkehaltig sind, wird Stärke als Bindemittel zusätzlich zu dem in dem Überzug enthaltenen Nährstoff und/oder dem Ballaststoff eingesetzt. Dies bietet eine gute Anbindung des Überzugs an den Maiskolben.

Getreidemehle, Stärke und Stärkeprodukte sind in Wasser quellfähig und Verkleisterungsfähig. Durch die Verkleisterung entsteht eine besonders gute Bindung innerhalb des Überzugs und eine gute Haftung am Maiskolben. An dem frisch aufgebrachten, noch nicht ausgetrockneten Überzug kann eine Deckschicht zum Haften gebracht werden, wie nachfolgend näher beschrieben; dabei kann es sich um eine Mischung aus trockenen Futterteilchen handeln.

Auch andere Kohlehydrate außer Stärke, die Gele oder Gallerten bilden, sind als Bindemittel geeignet

Bevorzugt für kohlehydrathaltige Bindemittel bzw. Kohlehydrate als Bindemittel allgemein sind folgende Beispiele, einzeln oder im Gemisch: Getreidemehle oder Getreidestärkeprodukte, insbesondere Weizenmehl, Weizenstärke, Kartoffelstärke, Reisstärke, Maisstärke, Rosskastanienstärke, Zucker und modifizierte Zucker, insbesondere Dextrine, Algen oder Algenbestandteile, wie Agar-Agar oder Carrageen, andere pflanzliche Polysaccharide, wie Carubin (Johannisbrotkernmehl E410), Guarkernmehl (E412), Gummi arabicum oder Pektin.

Der Überzug sollte vorzugsweise wenigstens 25 Gew.-%, weiter vorzugsweise wenigstens 30 Gew.-% des jeweiligen Bindemittels enthalten.

In dem Überzug, d. h. mit dem Nährstoff oder den Nährstoffen und/oder dem Ballaststoff oder den Ballaststoffen und ggf. dem Bindemittel vermengt, ist in Weiterbildung der Erfindung wenigstens eine der folgenden Komponenten zusätzlich vorhanden (Gruppe a): Emulgatoren, Stabilisatoren, (weitere) Verdickungs- und Geliermittel, Geschmacksträger, funktionelle Verbindungen, pharmazeutische Verbindungen, farbgebende Verbindungen, Verbindungen zur Verbesserung der Haltbarkeit. Alle diese Zusatzstoffe oder weiteren Komponenten sind dem Fachmann grundsätzlich bekannt. Der Fachmann kann diese je nach Fütterungsaufgabe selbst auswählen und einsetzen.

Die Verbindungen zur Verbesserung der Haltbarkeit, d.h. in erster Linie Konservierungsmittel und Antioxidantien, sowie geeignete Emulgatoren, Stabilisatoren, Verdickungs- und Geliermittel werden bevorzugt gemäß Anlage 3 zur Futtermittelverordnung ausgewählt. Dabei können auch Mischungen mehrer Vertreter einer Zusatzstoffart, z.B. mehrere Antioxidantien, mehrere Emulgatoren usw. eingesetzt werden.

Als Geschmacksträger kommen unter anderem in Frage: Honig, Sirup, Pflanzenextrakte, Digests aus tierischem Material, stückige Komponenten, wie Kräuter, Früchte, Saaten, Nüsse, oder Gemüse, auch zusätzlich aromatisiert,

Als funktionelle Verbindungen können unter anderem eingesetzt werden; entzündungshemmende Stoffe, Stoffe zur Verbesserung der Haut-, Feder- und Felleigenschaften der Tiere, Stoffe zur Verbesserung des Körpergeruchs oder des Geruchs von Exkrementen, Stoffe zur Immunmodulation, Stoffe zur Unterstützung der Verdauungstätigkeit und zur Stabilisierung der Darmflora.

Unter pharmazeutischen Verbindungen sind Mittel zur Behandlung von und Vorbeugung gegen Krankheiten und Befindlichkeitsstörungen zu verstehen (Medikamente, Heilmittel, Gesundheitspflegemittel).

Farbgebende Verbindungen sind natürliche und künstliche Farbstoffe und farbige Partikel, insbesondere natürlich farbige Futterteilchen,

Weiterhin ist vorgesehen, dass auf dem Maiskolben ganz oder teilweise und auf dem Überzug ganz oder teilweise eine Deckschicht entweder in Form einer Glasur oder in Form einer an dem Überzug außen anhaftenden Schicht vorhanden sein kann.

Die Deckschicht enthält vorzugsweise eine der folgenden Komponenten (Gruppe b): Getreide, Saaten, Nüsse, Früchte, Gräser, Kräuter, Gemüse und Knollen, alle jeweils in ursprünglicher oder bearbeiteter Form.

Eine Glasur kann aus Zucker, Fett und Bindemittel, einzeln oder im Gemisch, bestehen. Dabei können auch in der Glasur weitere Komponenten oder Zusatzstoffe, wie oben für den Überzug beschrieben, vorhanden sein. Eine solche Glasur wird häufig eine farbige und/oder aromatische Glasur sein und sollte dünner sein als der Überzug mit Nähr- und/oder Ballaststoff(en).

Eine Deckschicht in Form einer an dem Überzug außen anhaftenden Schicht besteht vorzugsweise zum überwiegenden Teil aus Futterpartikeln, wie Getreide, Saaten, Nüssen, Früchten, Gräsern, Kräutern, Gemüsen und Knollen, alle jeweils in ursprünglicher oder bearbeiteter Form, wie insbesondere gehackt, geschrotet, grobvermahlen, chemisch aufgeschlossen, in Extrudaten und Pellets.

Bevorzugt besitzt das Futtermittel einen Überzug mit stärkehaltigem Bindemittel bzw. Stärke als Bindemittel, und einer Mischung, die aus Komponenten der folgenden Gruppen zusammengestellt ist: Vitamine, Mineralstoffe, Spurenelemente, funktionelle Verbindungen, Proteine, Aminosäuren, Ballaststoffe, Geschmacksträger, farbgebende Stoffe.

Weiter bevorzugt besitzt das Futtermittel eine Deckschicht, die wenigstens eine Komponente der folgenden Gruppe enthält: Saaten, insbesondere Getreide, Nüsse, Früchte, Gräser, Kräuter, Gemüse (einschließlich Leguminosen), Knollen, ganz besonders bevorzugt wenigstens eine Komponente der Gruppen: Getreide, Saaten, Kräuter, Früchte, Nüsse.

Der Maiskolben kann mit einer Halte- oder Aufhängevorrichtung versehen sein, die vorzugsweise in der Maiskolbenspindel befestigt ist. Hieran kann der Maiskolben, d.h. das Futtermittel, vom Tierhalter gehandhabt werden und mit der Aufhängevorrichtung kann der Maiskolben an den Käfigstäben eines Kleintierkäfigs fixiert werden. Der Futterkörper kann so von dem Tier benagt werden, ohne dass die Futterbestandtelle mit der Einstreu in Berührung kommen und verschmutzt werden. In einer bevorzugten Ausführungsform ist die Aufhängevorrichtung ein in die Maiskolbenspindel einschraubbarer Cliphalter, vorzugsweise in einer Ausführung wie in der DE 10 2008 006 230 offenbart.

Für die Erfindung muss auf dem Maiskolben ein gut haftender Überzug hergestellt werden. Die Erfindung umfasst daher auch ein Verfahren, mit dessen Hilfe der oben näher beschriebene, ernährungsphysiologische Überzug auf dem Maiskolben verwirklicht werden kann.

Die Aufgabe der Erfindung wird demnach gelöst durch ein Verfahren zur Herstellung des Futtermittels aus einem natürlichen Maiskolben, wie oben beschrieben, wobei auf einen Maiskolben eine wenigstens ein Bindemittel und Wasser enthaltende Masse mit einer Viskosität von 150 bis 3100 cP, vorzugsweise 750 bis 2600 cP aufgetragen wird und der beschichtete Futtermittel-Maiskolben abschließend getrocknet wird.

Durch den Viskositätsbereich wird sichergestellt, dass das Bindemittel genügend gequollen ist bzw. geliert ist, so dass die Masse einen auf dem Maiskolben haftenden Überzug bilden kann. Das Bindemittel ist sehr bevorzugt ein Kohlehydrat, dessen gequollene Matrix mit dem Maiskolben in Wechselwirkung treten kann, so dass der Überzug, wie im Rahmen der Erfindung gefunden wurde, gut am Kolben haftet. Beim Trocknen des Überzugs verstärkt sich die Verkleisterung und ergibt einen haltbaren Überzug aus der Masse.

In der Masse ist der ernährungsphysiologisch erwünschte Nährstoff und/oder Ballaststoff, wobei es sich jeweils um einen oder mehrere Nährstoffe und einen oder mehrere Ballaststoffe und Mischungen verschiedener Vertreter dieser beiden Futtermittelgruppen handeln kann, in der Regel zusätzlich vorhanden. Dies gilt besonders, wenn das Bindemittel Stärke ist, da der Maiskolben mit Stärke nicht ergänzt zu werden braucht. Es ist jedoch möglich, dass ein Ballaststoff oder Nährstoff gewählt wird, der gleichzeitig das Bindemittel darstellt. In dem speziellen Fall ist kein gesondertes Bindemittel erforderlich. Beide Funktionen - den Überzug binden und den Maiskolben ernährungsphysiologisch ergänzen - würden dann von einem Stoff zugleich erfüllt.

Die bevorzugte Trockentemperatur für die auf den Maiskolben aufgebrachte Masse, d.h. den Überzug oder auch die Deckschicht, falls es sich um eine Glasur handelt, liegt zwischen 90 und 100 °C. Bei dieser Temperatur liegt die bevorzugte Trockenzeit zwischen 1 und 2 Stunden, vorzugsweise 1,5 bis 2 Stunden - bei geringerer Temperatur entsprechend länger, bei höherer Temperatur etwas kürzer.

Eine mögliche Ausführungsform, die Masse für den Überzug auf den Kolben aufzutragen, besteht darin, die Masse durch Tunken des Kolbens in die Masse aufzubringen. Alternativ kann der Kolben ach mit der Masse beschichtet werden, insbesondere durch Bestreichen oder Begießen.

Dabei ist es bevorzugt, dass die Masse zusätzlich Überzugsbestandteile der Gruppe a) oder der Gruppen a) und b) enthält.

Die Beschichtung kann vollständig oder als Teilbeschichtung erfolgen.

Eine bevorzugte Weiterbildung des Verfahrens sieht vor, dass der Maiskolben nach dem Auftragen der Überzugsmasse, vor dem Trocknen, in wenigstens einem der Überzugsbestandteile der Gruppe b) oder einer Mischung von Überzugsbestandteilen der Gruppen b) und a) gewälzt und danach getrocknet wird.

Hierdurch wird eine Deckschicht aus bevorzugt grobstückigen Teilchen erzeugt. Durch das Wälzen können besonders gut Futterpartikel wie Getreide, Saaten, Nüsse, Früchte, Gräser, Kräuter, Gemüse und Knollen, alle jeweils sowohl in ursprünglicher als auch bearbeiteter Form sowie in Form von Extrudaten oder Pellets aufgebracht werden.

Gut geeignete Getreide und Saaten für die Gruppe b) und die Deckschicht sind: Hirse, Weizen, Milo, Dari, Kardi, Rübsen, Hanf, Kanariensaat, Mohn, Sonnenblumankerne, Negersaat, Hafer, Gerste, Sesam, Leinsaat, Amaranth, Quinoa, und andere mehr, die dem Fachmann als in diese Reihe gehörige Futtermittel bekannt sind.

Geeignete Nüsse für die Gruppe b) und die Deckschicht sind unter anderem Haselnüsse, Erdnüsse, Paranüsse und Zirbelnüsse, jedoch auch andere Nüsse, die dem Fachmann als in diese Reihe gehörige Futternüsse bekannt sind.

Als Gräser und Kräuter für die Gruppe b) und die Deckschicht sind zum Beispiel geeignet: Luzerne, Basilikum, Salbei, Rosmarin, Thymian, Spitzwegerich, Vogelmiere, Dill, Petersilie, und andere dem Fachmann bekannte Kräuter und Gräser.

Als Gemüse und Knollen für die Gruppe b) und die Deckschicht sind zum Beispiel geeignet: Karotten, Paprika, Rote Bete, Lauch, Erbsen, Tomaten, Bohnen, Pastinaken, Topinambur und Kartoffeln.

Als Früchte für die Gruppe b) und die Deckschicht sind zum Beispiel geeignet: Aprikosen, Bananen, Orangen, Kiwi, Feigen, Datteln, Holunderbeeren, Waldbeeren, Wacholderbeeren, Ebereschenbeeren, Rosinen und Korinthen.

Die Vorgänge Beschichten und Trocknen oder die Vorgänge Beschichten, Wälzen und Trocknen können vorzugsweise an demselben Maiskolben mehrmals ausgeführt werden.

Der letzte Beschichtungsvorgang kann als Teilbeschichtungen ausgeführt werden.

Zu Beginn des Verfahrens, vor dem Beschichten, können die Maiskolben auf eine zuvor festgelegte Standardlänge geschnitten werden. Das Kappen kann an einem Ende oder an beiden Enden erfolgen.

Vorzugsweise an der Kolbenspindel kann eine Aufhänge-, Halte- oder Befestigungsvorrichtung angebracht werden. Dies geschieht bevorzugt vor dem Beschichten, da der Maiskolben dann bereits für den Tauch- oder Beschichtungsvorgang, mit dem der Überzug aufgebracht wird, an der Befestigungsvorrichtung gehaltert werden kann.

## Patentansprüche

1. Futtermittel aus einem Maiskolben, **dadurch gekennzeichnet, dass** der Maiskolben mit einem auf dem Maiskolben haftenden, den Maiskolben ganz oder teilweise bedeckenden Überzug versehen ist, der wenigstens einen ausgewählten Nährstoff und/oder wenigstens einen Ballaststoff enthält.

2. Futtermittel nach Anspruch 1, **dadurch gekennzeichnet, dass** der Überzug wenigstens ein Vitamin, wenigstens einen Mineralstoff, wenigstens ein Spurenelement und/oder wenigstens eine Aminosäure enthält.

3. Futtermittel nach Anspruch 1 oder 2, **dadurch gekennzeichnet, dass** der Überzug wenigstens ein Bindemittel enthält, welches mit Wasser zur Quellung und/oder Verkleisterung und/oder Gelbildung befähigt ist, vorzugsweise ein Kohlehydrat oder kohlehydrathaltiges Bindemittel, weiter vorzugsweise Stärke oder ein stärkehaltiges Bindemittel,

4. Futtermittel nach einem der Ansprüche 1 bis 3, **dadurch gekennzeichnet, dass** in dem Überzug wenigstens eine der folgenden Komponenten zusätzlich vorhanden ist: Emulgatoren, Stabilisatoren, Verdickungs- und Geliermittel, Geschmacksträger, funktionelle Verbindungen, pharmazeutische Verbindungen, farbgebende Verbindungen, Verbindungen zur Verbesserung der Haltbarkeit (Gruppe a).

5. Futtermittel nach einem der Ansprüche 1 bis 4, **dadurch gekennzeichnet, dass** auf dem Maiskolben ganz oder teilweise und auf dem Überzug ganz oder teilweise eine Deckschicht entweder in Form einer Glasur oder in Form einer an dem Überzug außen anhaftenden Schicht vorhanden ist.

6. Futtermittel nach Anspruch 5, **dadurch gekennzeichnet, dass** die Deckschicht eine der folgenden Komponenten enthält: Getreide, Saaten, Nüsse, Früchte, Gräser, Kräuter, Gemüse und Knollen, alle jeweils in ursprünglicher oder bearbeiteter Form (Gruppe b).

7. Futtermittel nach einem der Ansprüche 1 bis 6, **dadurch gekennzeichnet, dass** der Maiskolben mit einer Halte- oder Aufhängevorrichtung versehen ist, die vorzugsweise in der Maiskolbenspindel befestigt ist.

8. Verfahren zur Herstellung des Futtermittels nach einem der Ansprüche 1 bis 7, **dadurch gekennzeichnet, dass** auf einen Maiskolben eine wenigstens ein Bindemittel und Wasser enthaltende Masse mit einer Viskosität von 150 bis 3100 cP aufgetragen wird und der beschichtete Futtermittel-Maiskolben abschließend getrocknet wird.

9. Verfahren nach Anspruch 8, **dadurch gekennzeichnet, dass** die Viskosität der Masse 750 bis 2600 cP beträgt.

10. Verfahren nach Anspruch 8 oder 9, **dadurch gekennzeichnet, dass** das Auftragen der Masse für den Überzug auf den Kolben durch Tunken des Kolbens in die Masse oder durch Beschichten der Masse auf den Kolben, insbesondere durch Bestreichen oder Begießen, erfolgt.

11. Verfahren nach einem der Ansprüche 8 bis 10, **dadurch gekennzeichnet, dass** die Masse zusätzlich Überzügsbestandteile der Gruppe a) oder der Gruppen a) und b) enthält.

12. Verfahren nach einem der Ansprüche 8 bis 11, **dadurch gekennzeichnet, dass** die Beschichtung als Teilbeschichtung erfolgt.

13. Verfahren nach einem der Ansprüche 8 bis 12, **dadurch gekennzeichnet, dass** der Maiskolben nach dem Auftragen der Überzugsmasse, vor dem Trocknen, in wenigstens einem der Überzugsbestandteile der Gruppe b) oder einer Mischung von Oberzugsbestandtellen der Gruppen b) und a) gewälzt und danach getrocknet wird.

14. Verfahren nach einem der Ansprüche 8 bis 13, **dadurch gekennzeichnet, dass** die Vorgänge Beschichten und Trocknen oder die Vorgänge Beschichten, Wälzen und Trocknen an demselben Maiskolben mehrmals ausgeführt werden.

15. Verfahren nach Anspruch 14, **dadurch gekennzeichnet, dass** der letzte Beschichtungsvorgang als Teilbeschichtungen ausgeführt wird.
